Europäisches Patentamt

(19) European Patent Office

Office européen des brevets

(11) Numéro de publication: **0 094 871**
**B1**

(12) **FASCICULE DE BREVET EUROPEEN**

(45) Date de publication du fascicule du brevet:
**18.12.85**

(21) Numéro de dépôt: **83400934.2**

(22) Date de dépôt: **09.05.83**

(51) Int. Cl.⁴: **H 02 H 1/00**

(54) **Relais électronique de détection d'arc.**

(30) Priorité: **19.05.82 FR 8208926**

(43) Date de publication de la demande:
**23.11.83 Bulletin 83/47**

(45) Mention de la délivrance du brevet:
**18.12.85 Bulletin 85/51**

(84) Etats contractants désignés:
**BE CH DE GB IT LI NL SE**

(56) Documents cités:
**EP - A - 0 053 229
CH - A - 369 815
DE - A - 2 103 472
DE - B - 1 126 011
FR - A - 799 271
US - A - 3 588 611**

**Le dossier contient des informations techniques
présentées postérieurement au dépôt de la demande et
ne figurant pas dans le présent fascicule.**

(73) Titulaire: **MERLIN GERIN, Rue Henri Tarze,
F-38050 Grenoble Cedex (FR)**

(72) Inventeur: **Terracol, Claude, Merlin Gerin,
F-38050 Grenoble Cedex (FR)**
Inventeur: **Mertz, Jean-Luc, Merlin Gerin,
F-38050 Grenoble Cedex (FR)**

(74) Mandataire: **Kern, Paul et al, Merlin Gerin Sce.
Brevets 20, rue Henri Tarze, F-38050 Grenoble Cedex
(FR)**

## Description

L'invention est relative à un dispositif de protection d'une installation électrique contre un arc de puissance amorcé sur un jeu de barres de l'installation, ledit dispositif comportant un organe détecteur d'arc susceptible d'envoyer, en cas de défaut d'arc, un ordre de déclenchement à un appareil de coupure situé en amont du défaut.

La protection contre les court-circuits d'un tableau basse tension est le plus souvent confiée à un ou plusieurs disjoncteurs d'arrivée placés à l'entrée du tableau. Ces appareils sont équipés de déclencheurs instantanés ou à court retard qui commandent l'ouverture du disjoncteur correspondant à deux conditions:

— un certain seuil de courant doit être dépassé,

— une certaine temporisation doit s'écouler en fonction des impératifs de sélectivité avec l'aval. (Dans certains cas, la temporisation peut être nulle).

La protection avec seuil et temporisation éventuelle est satisfaisante pour les défauts dits «francs», c'est-à-dire pour lesquels le courant de court-circuit ne circule que dans des conducteurs solides. Les jeux de barres du tableau n'ont alors à supporter que des contraintes mécaniques et thermiques bien précises, pour lesquelles on peut aisément les calculer.

Malheureusement, ce type de défaut est assez théorique, et les court-circuits réels dans les tableaux mettent presque toujours en jeu un arc électrique, même quand le défaut est initialisé par un corps métallique, la fusion ou la répulsion de celui-ci entraîne très rapidement l'insertion d'un arc. Ces défauts avec arc ont une double caractéristique:

— ils sont une source importante de destructions pour le matériel et de danger pour le personnel. Ces risques sont directement proportionnels à la durée pendant laquelle le défaut se maintient et ils sont déjà importants pour des durées correspondant aux temporisation habituellement pratiquées sur les déclencheurs à court retard;

— ils présentent une intensité de courant beaucoup plus faible qu'un défaut d'arc. En effet, la tension d'arc entre conducteurs représente une fraction importante de la tension du réseau, introduisant ainsi une limitation pouvant atteindre un rapport de 2 à 1. Cette réduction de courant est plutôt favorable tant que le déclenchement reste assuré, mais elle peut avoir des conséquences très graves si le courant ainsi affecté tombe à une valeur inférieure au seuil d'intervention du disjoncteur intéressé. Il faudra alors attendre pour l'élimination du défaut l'intervention d'une autre protection, généralement beaucoup plus longue.

On peut essayer de se prémunir contre ce risque en réglant les déclencheurs instantanés à un seuil aussi bas que possible, mais on est limité dans cette voie par la nécessité de ne pas intervenir sur des pointes passagères de courant pour lesquelles tout déclenchement serait intempestif. De plus, des modifications de réglage plus ou moins contrôlées sont toujours possibles en exploitation.

Le résultat de cette analyse peut s'exprimer comme suit:

— les défauts avec un arc sur les conducteurs principaux des tableaux basse tension constituent un risque majeur pour le matériel et pour le personnel;

— ce risque est très limité si le défaut est éliminé sans temporisation par un disjoncteur;

— en cas de temporisation, le risque croît avec la durée de celle-ci et peut devenir assez important pour les valeurs couramment pratiquées (0,2 à 0,5 s);

— indépendamment de toute notion de temporisation, le risque devient très grave si l'intensité du courant de défaut se maintient en dessous du seuil d'intervention du disjoncteur qui devrait normalement l'éliminer.

La présente invention vise à rétablir un niveau élevé de sécurité pour les défauts avec arc, en introduisant, en plus des protections classiques, une protection supplémentaire par un relais de détection d'arc. Le principe de base de ce relais est de détecter la présence d'un arc sur le jeu de barres d'un tableau et, dès cette détection effectuée, d'envoyer au disjoncteur un ordre de déclenchement instantané. On élimine ainsi les risques mentionnés plus haut:

— aucune temporisation n'est plus à introduire dans la mesure où le défaut pris en compte ne peut se trouver qu'immédiatement à l'aval du disjoncteur intéressé et ou toute notion de sélectivité disparaît;

— le critère de détection d'arc n'étant pas le courant, il n'y a aucun risque de non-intervention pour insuffisance de courant.

Il reste à définir un critère mesurable traduisant à coup sûr la présence d'un arc dans le tableau. Certains constructeurs ont proposé l'utilisation de la lumière intense produite par l'arc pour exciter des capteurs photosensibles dont le changement d'état est utilisé pour la génération d'un signal de déclenchement. Cette technologie présente certains inconvénients:

— nécessité, sur des tableaux importants, de prévoir plusieurs capteurs en des endroits différents, pour éviter le risque qu'un arc ne soit pas «vu»;

— présence de liaisons câblées influant défavorablement sur la fiabilité;

— risque de confusion de la lueur d'un arc de défaut avec celle de la coupure d'un appareil.

Un critère utilisé par la présente invention permet de s'affranchir de ces inconvénients. Il consiste simplement en une analyse permanente de la tension entre les phases du circuit de puissance. En cas de défaut avec arc sur ce circuit, cette tension prend une allure très caractéristique, qui se distingue parfaitement de ce que l'on peut rencontrer en temps normal, même sur un réseau perturbé. Le rôle du relais de détection est d'effectuer cette distinction dans le temps le plus court possible et d'envoyer l'ordre de déclenchement au disjoncteur.

Remarquons tout d'abord que la captation peut être monophasée, sauf cas très particulier dans la disposition des conducteurs. En effet, dans la quasi-totalité des cas, ces conducteurs sont des barres nues cheminant côte à côte à des distances de quelques centimètres. Dans ces conditions, il est évident qu'un arc ayant pris naissance entre deux phases se généralisera très rapidement et qu'il pourra donc être détecté entre n'importe lesquels des trois conducteurs.

L'expérience montre que la tension ainsi captée entre deux phases se différencie très nettement de la tension en service normal:

— par sa forme, qui est très éloignée d'une sinusoïde pure. On remarque, en particulier, à l'occasion de chaque passage à zéro, une montée très rapide jusqu'à une valeur de 200 V environ, donnant lieu à une dérivée dU/dt très supérieure à ce qui peut exister en régime normal;

— par sa valeur qui est sensiblement inférieure à la tension du réseau.

Le principe de surveillance de la tension alternative du jeu de barres est déjà connu selon le brevet suisse CH-A N° 369815, qui décrit un dispositif de protection d'une installation électrique contre un arc de puissance, dans lequel l'organe détecteur d'arc est formé par un relais. Ce relais détecte en permanence la tension dans l'installation et délivre un signal de commande lorsque cette tension présente une dérivée temporelle dépassant une valeur déterminée. Le signal de commande provoque la fermeture d'un disjoncteur shunt qui a pour fonction de court-circuiter les trois conducteurs de phase se trouvant en amont du jeu de barres. Il en résulte une diminution de la tension à l'endroit du défaut dans la dérivation, suivie de l'extension naturelle de l'arc. Le relais de déclenchement provoque ensuite l'ouverture de l'interrupteur principal d'alimentation du jeu de barres auquel est raccordée la dérivation.

La demande de brevet allemand DE-A N° 2103472 décrit un dispositif de détection d'arc basé sur la présence de composantes à une fréquence supérieure à la fréquence du réseau dans la tension. La tension mesurée est appliquée par l'intermédiaire d'un circuit bouchon et d'un filtre passe-haut à un circuit de temporisation qui délivre un signal de commande pour un relais.

La demande de brevet européen EP-AI N° 0053229 (publiée le 9 juin 1982), constituant un état de la technique suivant l'article 54 (3) et (4) CBE, se rapporte à un dispositif de détection d'arc basé sur la surveillance combinée de la tension et du courant d'arc. La forme et les composantes de fréquence de la tension sont contrôlées par un discriminateur et un filtre, tandis que le courant est surveillé par un circuit à seuil, les signaux de sortie de l'ensemble des circuits étant appliqués à une porte logique ET délivrant l'ordre de déclenchement.

Le problème posé par ces dispositifs connus de l'art antérieur est celui des déclenchements intempestifs, étant donné leur incapacité de distinction correcte entre un incident passager et un défaut réel d'arc.

La présente invention a pour but de remédier à ces inconvénients et de réaliser un dispositif de protection comportant un organe détecteur d'arc fiable évitant les risques de déclenchement intempestif.

A cet effet, ledit organe détecteur d'arc est formé par un relais électronique comprenant:

— des moyens de surveillance de la tension alternative U présente entre les conducteurs du jeu de barres,

— des moyens analogiques de discrimination du défaut sensibles à l'altération de la forme de la tension U et délivrant un signal de commande lorsque la dérivée temporelle de la tension U dépasse une valeur déterminée, et

— des moyens de traitement du signal de commande pour élaborer l'ordre de déclenchement suite à l'apparition d'un défaut d'arc.

Suivant l'invention, lesdits moyens analogiques de discrimination comportent un circuit de filtrage associé à un circuit à seuil, ce dernier étant raccordé à un circuit de mise en forme coopérant avec un circuit de traitement logique intervenant dans l'élaboration du processus de déclenchement en assurant la distinction entre un incident passager et un défaut réel d'arc, ledit circuit de traitement comportant:

— des organes de temporisation formés par une première et une deuxième bascule monostable recevant chacune la sortie du circuit de mise en forme et restant dans l'état logique 1 durant des temporisations intermédiaires T1 et T2 respectivement. Lors de l'émission d'une première impulsion par le circuit de mise en forme, la temporisation T2 de la deuxième bascule monostable étant supérieure à celle T1 de la première bascule monostable;

— une première bascule bistable pilotée par le circuit de mise en forme et par la deuxième bascule monostable de façon telle que le passage de la sortie de la première bascule bistable vers l'état logique 1 s'opère lors de l'émission d'une deuxième impulsion par le circuit de mise en forme, et que la sortie de ladite première bascule bistable retourne automatiquement à l'état logique 0 à la fin de la temporisation T2;

— une deuxième bascule bistable commandée par le circuit de mise en forme et par la sortie d'une porte logique ET recevant les sorties de la première bascule monostable et de la première bascule bistable, le circuit de traitement étant agencé pour délivrer l'ordre de déclenchement après l'émission de trois impulsions par le circuit de mise en forme 32, la troisième impulsion du circuit de mise en forme devant intervenir obligatoirement durant la temporisation T2 de la deuxième bascule monostable et après la fin de la temporisation T1 de la première bascule monostable.

On remarque que la distinction entre un incident passager et un défaut réel d'arc est assurée par un circuit de traitement logique à opérateurs séquentiels comprenant des organes de temporisation et de comptage agencés pour délivrer l'ordre de déclenchement lors du comptage de trois impulsions fournies par le circuit de mise en forme.

Un deuxième critère d'intervention qui peut être utilisé dans le relais est la valeur de la tension U. A cet effet, le relais comporte un dispositif détecteur de la valeur de la tension U, de manière à délivrer un ordre de commande lorsque la valeur efficace de U est comprise entre deux limites U1 et U2 de valeurs prédéterminées.

La valeur U1 peut être prise assez faible (quelques dizaines de volts par exemple). Son rôle est essentiellement d'empêcher l'intervention du relais quand le système est hors tension.

La valeur U2 doit être supérieure à la plus grande tension d'arc pouvant se présenter et inférieure au minimum possible de la tension du réseau, ce qui laisse un créneau suffisant dans les installations usuelles.

Ce mode de détection doit être associé à une courte temporisation pendant laquelle la tension doit se maintenir dans la fourchette requise. Cette temporisation doit être suffisante pour:
— éliminer des fluctuations de tension de très courte durée (coupure par un appareil aval, par exemple);
— permettre au dispositif de filtrage d'éliminer les harmoniques dans la mesure où on ne retient pour U que la composante fondamentale.

Un critère additionnel d'intervention du relais fait apparaître l'intensité du courant I circulant dans le jeu de barres. Ce critère est basé sur un seuil Is assez bas pour que tout défaut avec arc soit supérieur à ce seuil, par exemple de l'ordre de grandeur du courant nominal. Le relais ne fonctionnera pas tant que le courant sera inférieur au seuil Is.

Les trois critères d'intervention du relais utilisant la forme et la valeur de la tension et l'intensité de courant peuvent être associés par une fonction logique ET pour éviter les risques de déclenchement intempestif.

D'autres avantages et caractéristiques ressortiront plus clairement de l'exposé qui va suivre d'un mode de mise en œuvre de l'invention donné à titre d'exemple non limitatif et représenté au dessin annexé dans lequel:

la fig. 1 montre un tableau électrique basse tension équipé d'un relais de détection d'arc selon l'invention;

la fig. 2 représente le schéma synoptique du relais électronique de détection d'arc;

la fig. 3 montre le schéma du circuit de traitement logique du relais;

la fig. 4 illustre le diagramme des états du circuit selon la fig. 3;

la fig. 5 représente un développement de l'invention faisant intervenir la forme et la valeur de la tension ainsi que l'intensité du courant.

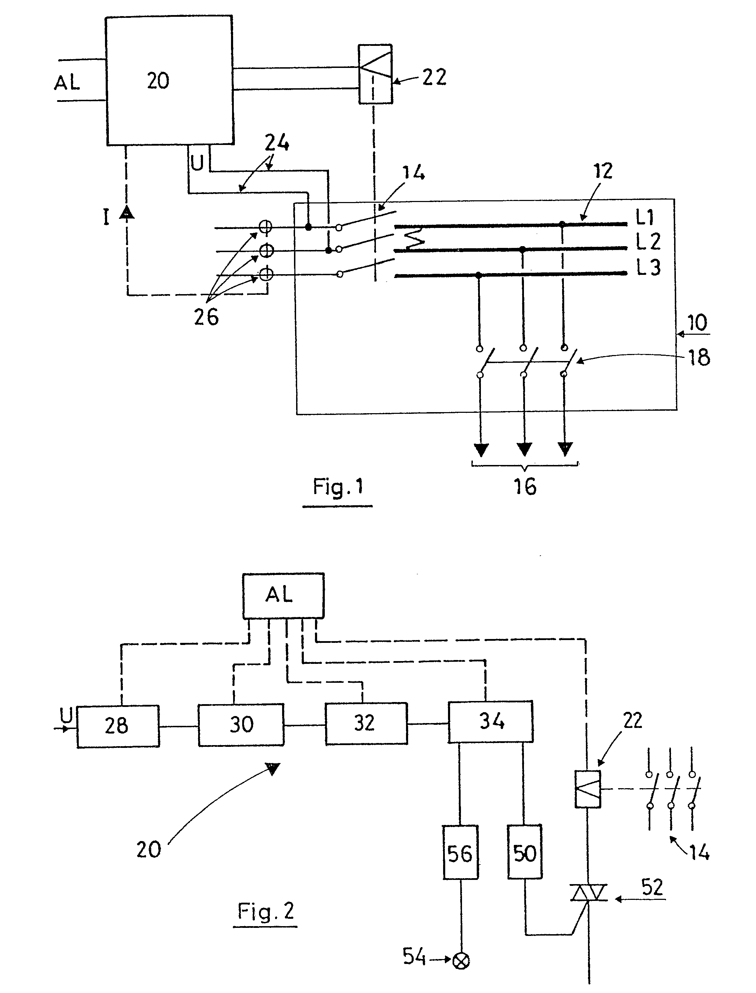

La fig. 1 montre schématiquement une armoire 10 d'un tableau de distribution basse tension renfermant un jeu de barres 12 à conducteurs L1, L2, L3 alimentés par un disjoncteur d'arrivée 14. Ce dernier, placé à l'entrée du tableau, est raccordé électriquement au réseau d'alimentation ou à un transformateur MT/BT. L'armoire 10 peut recevoir tout appareillage électrique fixe ou débrochable, et on a représenté, à titre d'exemple, un départ 16 triphasé connecté au jeu de barres 12 et protégé par un disjoncteur de départ 18.

Le disjoncteur d'arrivée 14 comporte un déclencheur classique magnétothermique ou électronique susceptible de provoquer l'ouverture automatique des contacts du disjoncteur 14 lorsque l'intensité du courant dépasse un seuil de déclenchement prédéterminé, par exemple en cas de surcharge ou de court-circuit. Des moyens de déclenchement auxiliaire peuvent également être incorporés dans le disjoncteur 14, notamment pour la détection d'un défaut différentiel ou d'un manque de tension sur le réseau.

Selon l'invention, une protection supplémentaire est affectée au disjoncteur d'arrivée 14 et comprend un relais de détection d'arc désigné par le repère général 20. Ce relais 20 sert à détecter, à l'intérieur de l'armoire 10, la présence d'un arc sur le jeu de barres 12 et à envoyer, après traitement, un ordre de déclenchement instantané à une bobine 22 de commande d'ouverture du disjoncteur d'arrivée 14.

Un circuit d'alimentation AL est associé au relais de détection d'arc 20 et au circuit de la bobine de déclenchement 22. Une première entrée du relais 20 est connectée par des conducteurs de liaison 24 aux différentes phases de réseau en amont du disjoncteur 14 d'arrivée. Une deuxième entrée du relais 20 est reliée électriquement à des capteurs de courant 26 susceptibles de délivrer l'image du courant circulant dans le jeu de barres 12 en position fermée du disjoncteur 14. La détection de l'arc par le relais 20 s'effectue par l'analyse permanente de la tension U, par exemple, entre les conducteurs de phase du réseau en amont du disjoncteur 14.

Cette tension U est identique à celle existant entre les conducteurs L1, L2, L3 du jeu de barres 12. La présence d'un arc sur le jeu de barres 12 se traduit par une altération de la forme de la tension U comparée à son allure dans les conditions normales de fonctionnement. Le rôle du relais 20 consiste à effectuer cette distinction dans le temps le plus court possible et à envoyer l'ordre de déclenchement au disjoncteur d'arrivée 14.

La fig. 2 représente le schéma synoptique du relais de détection d'arc 20. Les principales fonctions de ce relais 20 sont les suivantes:
— détection de perturbations électriques dans la tension U alternative présente entre les conducteurs L1, L2, L3 du jeu de barres 12;
— distinction d'un incident passager et d'un défaut d'arc;
— mémorisation du défaut d'arc et déclenchement du disjoncteur d'arrivée 14 en amont du défaut.

La première fonction de détection de perturbations est assurée par une partie analogique du relais 20 qui comporte un circuit de filtration 28 à fitlre actif passe-bande associé à un circuit à seuil 30, sensible à l'amplitude de la variation de la tension U. L'onde de tension d'arc est en effet caractérisé par un front de montée, dont le $\frac{dU}{dt}$ très élevé est détecté par la dérivation du signal U de tension. Le circuit de filtrage 28 conserve uniquement une gamme de fréquences dans laquelle se situent ces fronts raides:

— la fréquence de coupure basse du filtre passe-bande est de l'ordre de 300 Hz, de manière à rejeter la fréquence fondamentale 50 Hz et ses harmoniques jusqu'à l'ordre de 5;

— la fréquence de coupure haute est au voisinage de 8 kHz pour supprimer les hautes fréquences n'ayant aucune corrélation avec un défaut d'arc.

Le circuit à seuil 30 permet d'éliminer certains phénomènes parasites pouvant exister en fonctionnement normal et de retenir exclusivement les fronts raides engendrant une variation brusque de tension d'une amplitude prédéterminée. Le circuit à seuil 30 est composé d'un seuil positif et d'un seuil négatif de valeurs identiques, de manière à tenir compte des variations positives et négatives de la tension d'arc. Le circuit de seuil 30 délivre un signal de sortie qui peut présenter deux états logiques 0 ou 1 indiquant, soit la présence, soit l'absence d'un arc sur le jeu de barres. Plusieurs impulsions rapprochées dans le temps (moins de 1 ms) sont considérées comme une seule impulsion grâce à un circuit à diode et capacité associé à la sortie du circuit à seuil 30.

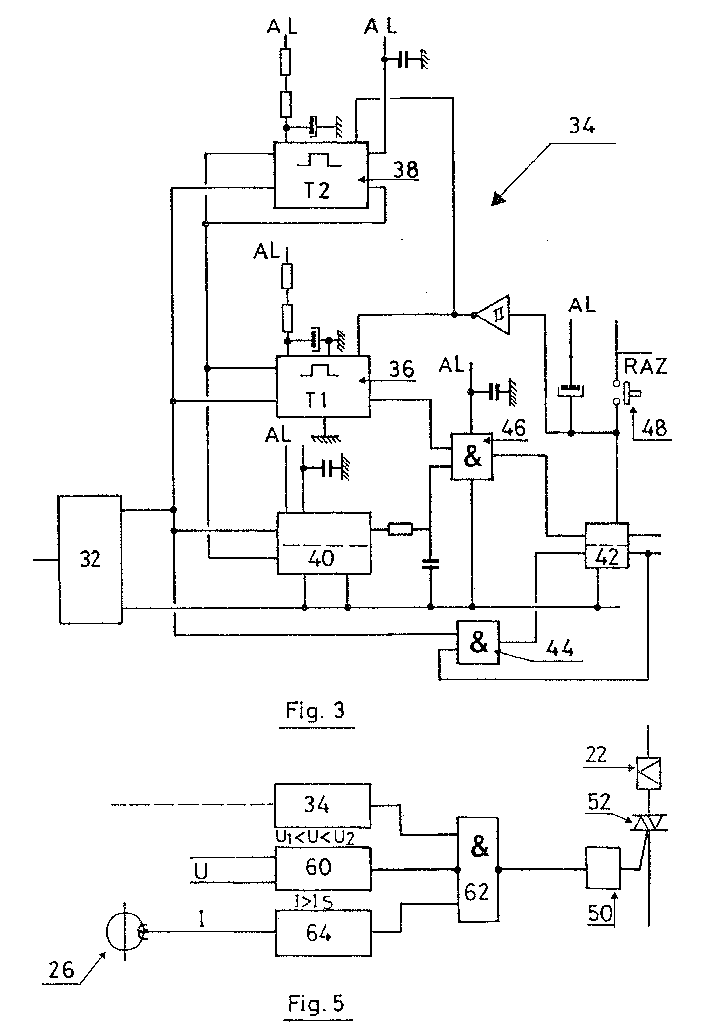

La deuxième fonction de distinction d'un incident passager et d'un défaut réel d'arc est opérée par la partie numérique du relais 20 située à la suite du circuit à seuil 30. Il faut, en effet, s'assurer que l'impulsion délivrée par le circuit à seuil 30 corresponde bien à un défaut d'arc sur le jeu de barres 12 et non à des incidents passagers dus, par exemple, à l'ouverture d'un disjoncteur situé en aval, à l'absence fugitive de tension, aux phénomènes de tension transitoire de rétablissement donnant lieu à des oscillations de tension ou à l'alimentation du réseau basse tension par fermeture d'un disjoncteur dont les contacts rebondissent. La sortie du circuit à seuil 30 est connectée à un circuit de mise en forme 32 branché à un circuit de traitement logique 34 qui sera décrit en détail par la suite, en référence à la fig. 3.

Le circuit de traitement logique 34 (fig. 3) à opérateurs binaires séquentiels comporte, à titre d'exemple, deux bascules monostables 36, 38 et deux bascules bistables 40, 42 du type RS, alimentées par le circuit d'alimentation AL. Les entrées des bascules 36, 38, 40 sont connectées à la sortie du circuit de mise en forme 32, et la sortie de la deuxième bascule bistable 42 présente un niveau logique 1 ou 0 qui indique la présence ou l'absence d'un défaut d'arc. L'une des entrées de la bascule 42 est branchée au circuit de mise en forme 32 par l'intermédiaire d'une porte logique ET 44. L'autre entrée de la bascule 42 est reliée à la sortie d'une porte logique ET 46 dont les entrées sont connectées aux sorties des bascules 36 et 40. Un circuit de remise à zéro RAZ à bouton de commande 48 manuelle est associé à la bascule bistable 42.

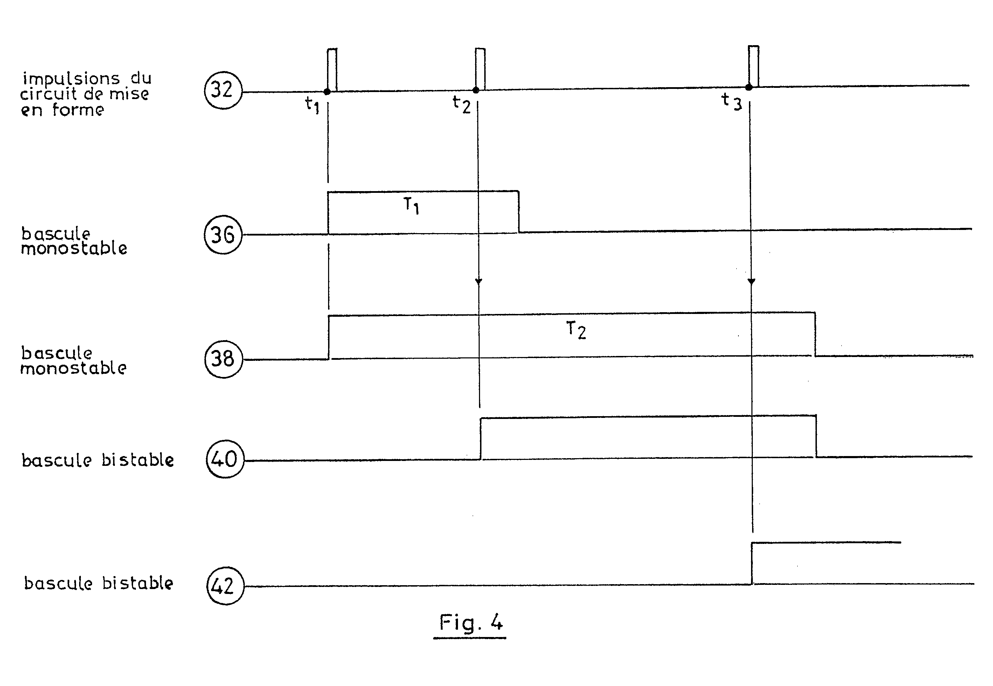

Le fonctionnement du circuit de traitement logique 34, selon la fig. 3, est illustré sur le diagramme de la fig. 4:

— La première impulsion délivrée par le circuit 32 au temps t1 provoque le déclenchement des deux bascules monostables 36, 38. Les sorties de ces deux bascules 36, 38 restent dans l'état 1 durant des temporisations prédéterminées T1 et T2, la temporisation T2 de la deuxième bascule monostable 38 étant supérieure à celle T1 de la première bascule monostable 36.

— Une deuxième impulsion intervenant au temps t2 durant la temporisation T1 est mémorisée dans la première bascule bistable 40 qui passe alors de l'état logique 0 à 1. Cette bascule 40 bistable est automatiquement remise à zéro à la fin de la temporisation T2 de la deuxième bascule monostable 38. L'état logique 1 de la première bascule bistable 40 signifie l'émission par le circuit de mise en forme 32 de deux impulsions.

Un trou ou absence fugitive de tension peut également occasionner deux impulsions à fronts raides, une lorsque la tension disparaît et une autre, lors de son retour. Pour éviter une intervention intempestive du relais de détection d'arc 20, le circuit de traitement logique 34 est agencé pour que l'ordre de déclenchement ne soit délivré qu'après un comptage de trois impulsions.

— La troisième impulsion du circuit 32, pour être prise en compte et faire déclencher le relais 20, doit survenir, par exemple, au temps t3 après la fin de la temporisation T1 de la première bascule monostable 36 et obligatoirement durant la temporisation T2 de la deuxième bascule monostable 38. La première bascule bistable 40 se trouve dans l'état 1 et la porte logique ET 46 est débloquée. Le défaut est alors mémorisé dans la deuxième bascule bistable 42 qui passe de l'état logique 0 à 1.

La troisième fonction de mémorisation du défaut et de déclenchement du disjoncteur d'arrivée 14 est pilotée par la bascule 42 de sortie du circuit de traitement logique 34. Le changement de l'état logique 0 à 1 de la deuxième bascule bistable 42 génère une impulsion de déclenchement appliquée à un générateur d'impulsions 50 relié à la gâchette de déblocage d'un interrupteur statique 52, notamment un triac, en série avec la bobine 22 de déclenchement. La conduction du triac assure l'excitation de la bobine 22 suivie de l'ouverture des contacts du disjoncteur d'arrivée 14. La présence du défaut d'arc est signalée simultanément à distance au moyen d'un organe de visualisation 54 connecté à la bascule 42 du circuit 34 par l'intermédiaire d'un dispositif de commande 56.

La détection du défaut d'arc par le circuit de la fig. 2 est basée sur l'altération de la forme de l'onde de tension d'arc, grâce à l'analyse permanente de la tension U entre conducteurs de puissance, constituant ainsi un premier critère d'intervention du relais 20. Le circuit logique 34 doit compter trois impulsions avant de commander le déclenchement.

On a constaté que la présence d'un arc en tableau donne lieu à une tension dont la fondamentale est sensiblement inférieure à la tension normale du réseau. Il est dès lors facile d'en faire un autre critère d'intervention du relais 20, en concevant celui-ci pour qu'un ordre de déclenchement puisse être envoyé si la tension efficace captée U est comprise entre deux limites U1 et U2.

La valeur U1 peut être prise assez faible (quelques dizaines de volts par exemple). Son rôle est essentiellement d'empêcher l'intervention du relais quand le système est hors tension.

La valeur U2 doit être supérieure à la plus grande tension d'arc pouvant se présenter et inférieure au minimum possible de la tension du réseau, ce qui laisse un créneau suffisant dans les installations usuelles.

Ce mode de détection peut être associé à une temporisation pendant laquelle la tension doit se maintenir dans la fourchette requise. Cette temporisation doit être suffisante pour éliminer des fluctuations de tension de très courte durée (coupure par un appareil aval par exemple). Ce deuxième critère est élaboré dans un dispositif détecteur 60 (fig. 5).

Pour améliorer la fiabilité du système, les deux critères d'intervention du relais 20 basés sur la forme et la valeur efficace de la tension U peuvent être associés au moyen d'une porte logique ET 62 (fig. 5). Les deux critères doivent être satisfaits simultanément pour que l'ordre de déclenchement soit envoyé à la bobine 22 du relais 20.

Les risques de déclenchement intempestif sont ainsi fortement diminués. En effet, si on admet une probabilité P1 pour que le critère forme apparaisse anormalement et P2 pour le critère valeur, la probabilité de comportement aberrant du relais est ramenée à P1 × P2.

On peut encore améliorer cette fiabilité par adjonction d'un troisième critère, en l'occurrence le courant. Ce critère est basé sur un seuil Is assez bas, tel que le courant d'arc soit obligatoirement supérieur à ce seuil. Le critère courant est élaboré dans un comparateur 64 (fig. 5) dont l'entrée est reliée aux capteurs de courant 26 et dont la sortie est connectée à la troisième entrée de la porte logique ET 62. L'action du comparateur 64 n'intervenant que si le courant I circulant dans le jeu de barres 12 est supérieur au seuil Is.

Selon la fig. 5, trois conditions sont nécessaires pour que la porte logique 62 envoie un ordre de déclenchement au triac 52:
— comptage de trois impulsions par le circuit de traitement logique 34, la troisième impulsion intervenant obligatoirement durant la temporisation T2;
— déblocage du circuit 60 lors d'une variation de la valeur efficace de la tension U comprise entre U1 et U2;
— déblocage du comparateur 64 lorsque le courant I est supérieur à un seuil Is prédéterminé.

Dans une première réalisation, le relais 20 de détection d'arc selon les fig. 1 à 5 peut se présenter comme un composant indépendant que l'on peut installer dans le tableau à protéger et raccorder de façon classique, d'une part, au jeu de barres 12 et, d'autre part, au disjoncteur 14 à actionner (plus, le cas échéant, à la source auxiliaire si elle existe et à un capteur de courant 26, si ce critère est utilisé).

Ce mode de réalisation suppose donc des liaisons câblées qui doivent être minimisées en plaçant le relais 20 le plus près possible du disjoncteur 14, tout en veillant à ce qu'il ne soit pas exposé à un arc éventuel.

Un tel type de relais est nécessaire pour équiper une installation déjà existante.

Dans une deuxième réalisation, on peut imaginer d'incorporer le relais 20 au disjoncteur 14 lui-même, ce qui présente de nombreux avantages: en premier les liaisons câblées. Ensuite, si le disjoncteur est déjà équipé d'un déclencheur statique, un certain nombre de fonctions y sont déjà présentes et le relais de détection d'arc 20 ne se présente plus que comme des composants additionnels en quantité limitée.

Ce dernier type de réalisation permet, en particulier, la prise en compte très facile du critère courant, cette information étant toujours présente au niveau du déclencheur du disjoncteur 14.

Enfin, on peut rencontrer des parties d'installations qui ne sont pas protégées par un disjoncteur. C'est le cas, par exemple, des barres qui sont immédiatement en aval d'un alternateur. On peut alors parfaitement continuer à utiliser un relais de détection d'arc, mais l'ordre donné par ce dernier sera alors utilisé pour provoquer la désexcitation de l'alternateur.

L'invention n'est bien entendu nullement limitée au mode de mise en œuvre plus particulièrement décrit et représenté aux dessins annexés, mais elle s'étend en outre notamment au cas où le relais de détection d'arc 20 serait utilisé dans des postes blindés à enveloppes métalliques ou tableaux de distribution à haute ou moyenne tension.

L'alimentation AL est intégrée au relais 20 et comporte un composant capable d'emmagasiner l'énergie, notamment un condensateur ou un accumulateur. La bobine 22 de déclenchement doit être alimentée sous une tension convenable et avec une énergie suffisante. Deux cas sont à distinguer:
— On dispose d'une source auxiliaire indépendante. Le rôle du relais se borne alors à connecter cette source sur le circuit de la bobine.
— On ne dispose, pour alimenter la bobine 22, que de la tension du réseau. Au moment du défaut, celle-ci se transforme en tension d'arc dont la forme et la valeur peuvent largement fluctuer. Il faut alors s'assurer que cette tension sera toujours suffisante pour actionner la bobine, même en valeur minimale, ce qui veut dire qu'elle sera très surabondante en valeur maximale. Il faut donc prendre des dispositions pour que la bobine n'ait à supporter cette tension que pendant un laps de temps très court, juste suffisant pour assurer le déclenchement.

## Revendications

1. Dispositif de protection d'une installation électrique contre un arc de puissance amorcé sur un jeu de barres (12) de l'installation, comportant un organe détecteur d'arc susceptible d'envoyer, en cas de défaut d'arc, un ordre de déclenchement à un appareil de coupure (14) situé en amont du défaut, ledit organe détecteur d'arc étant formé par un relais électronique (20) comprenant:

— des moyens de surveillance de la tension alternative U présente entre les conducteurs du jeu de barres (12),

— des moyens analogiques de discrimination du défaut sensibles à l'altération de la forme de la tension U et délivrant un signal de commande lorsque la dérivée temporelle de la tension U dépasse une valeur déterminée, et

— des moyens de traitement du signal de commande pour élaborer l'ordre de déclenchement suite à l'apparition d'un défaut d'arc, caractérisé en ce que lesdits moyens analogiques de discrimination comportent un circuit de filtrage (28) associé à un circuit à seuil (30), ce dernier étant raccordé à un circuit de mise en forme (32) coopérant avec un circuit de traitement logique (34) intervenant dans l'élaboration du processus de déclenchement en assurant la distinction entre un incident passager et un défaut réel d'arc, ledit circuit de traitement (34) comportant:

— des organes de temporisation formés par une première (36) et une deuxième (38) bascule monostable recevant chacune la sortie du circuit de mise en forme (32) et restant dans l'état logique 1 durant des temporisations prédéterminées T1 et T2 respectivement, lors de l'émission d'une première impulsion par le circuit de mise en forme (32), la temporisation T2 de la deuxième bascule monostable (38) étant supérieure à celle T1 de la première bascule monostable (36),

— une première bascule bistable (40) pilotée par le circuit de mise en forme (32) et par la deuxième bascule monostable (38) de façon telle que le passage de la sortie de la première bascule bistable (40) vers l'état logique 1 s'opère lors de l'émission d'une deuxième impulsion par le circuit de mise en forme (32), et que la sortie de ladite première bascule bistable (40) retourne automatiquement à l'état logique 0 à la fin de la temporisation T2,

— une deuxième bascule bistable (42) commandée par le circuit de mise en forme (32) et par la sortie d'une porte logique ET (46) recevant les sorties de la première bascule monostable (36) et de la première bascule bistable (40), le circuit de traitement (34) étant agencé pour délivrer l'ordre de déclenchement après l'émission de trois impulsions par le circuit de mise en forme (32), la troisième impulsion du circuit de mise en forme (32) devant intervenir obligatoirement durant la temporisation T2 de la deuxième bascule monostable (38) et après la fin de la temporisation T1 de la première bascule monostable (36).

2. Dispositif de protection selon la revendication 1, caractérisé par le fait que le relais électronique (20) comprend, de plus, un dispositif détecteur (60) de la valeur de la tension U à surveiller, agencé pour délivrer un signal de commande lorsque la tension U est comprise entre deux limites U1 et U2 de valeurs prédéterminées.

3. Dispositif de protection selon la revendication 2, caractérisé par le fait que le dispositif détecteur (60) de la valeur de la tension U et le circuit de traitement logique (34) sont reliés à un circuit logique ET (62) de commande d'un interrupteur statique (52) qui pilote l'excitation d'une bobine de déclenchement (22) de l'appareil de coupure (14) situé en amont du défaut.

4. Dispositif de protection selon la revendication 3, caractérisé par le fait que le relais électronique (20) comporte en plus un comparateur de courant (64) délivrant un ordre au circuit logique ET (62) lorsque le courant I circulant dans le jeu de barres (12) est supérieur à un seuil Is prédéterminé.

5. Dispositif de protection selon la revendication 3 ou 4, caractérisé par le fait que la bobine (22) est alimentée, lors du déclenchement, par la tension de défaut.

## Patentansprüche

1. Schutzvorrichtung einer elektrischen Anlage gegen einen auf dem Sammelschienenstrang (12) der Anlage gezündeten Leistungslichtbogen, mit einem durch ein elektronisches Relais (20) gebildeten Lichtbogendetektor, der bei einem Lichtbogenfehler einen Auslösebefehl an einen stromaufwärts des Fehlers liegenden Unterbrecher (14) senden kann, welche Vorrichtung aufweist:

— Überwachungsmittel der zwischen den Stromschienen (12) liegenden Wechselspannung U,

— analoge Fehler-Diskriminiermittel, die eine Formänderung der Spannung U wahrnehmen und ein Steuersignal aussenden, wenn die Ableitung nach der Zeit der Spannung U einen vorbestimmten Wert überschreitet, und

— Verarbeitungsmittel des Steuersignals, um einen Auslösebefehl beim Erscheinen eines Lichtbogenfehlers zu entwickeln, dadurch gekennzeichnet, dass die genannten analogen Diskriminiermittel einen einem Schwellekreis (30) zugeordneten Filterkreis (28) aufweisen, welcher Schwellekreis an einem Formgebungskreis (32) angeschlossen ist, der mit einem logischen Verarbeitungskreis (34) zusammenarbeitet, der durch Unterscheidung einer zeitlichen Störung und eines echten Lichtbogenfehlers bei der Entwicklung des Auslösebefehls eintritt, welcher Verarbeitungskreis (34) aufweist:

— durch einen ersten (36) und einen zweiten (38) monostabilen Trigger gebildete Verzögerungsmittel, der jeder den Ausgang des Formgebungskreises (32) bekommt und in logischer Lage 1 bleibt, während vorbestimmten Verzögerungen $T_1$ und $T_2$, bzw. beim Aussenden eines ersten Impulses durch den Formgebungskreis (32), wobei die Verzögerung $T_2$ des zweiten monostabilen Triggers (38) grösser ist, als diese $T_1$ des ersten monostabilen Triggers (36),

— einen ersten bistabilen Trigger (40), der durch den Formgebungskreis (32) und den zweiten monostabilen Trigger (38) so gesteuert wird, dass der Übergang des Ausganges des ersten bistabilen Triggers (40) nach der logischen Lage 1 durch Aussenden eines zweiten Impulses durch den Formgebungskreis (32) gesteuert wird, und dass der Ausgang des genannten ersten bistabilen Triggers (40) automatisch in der logischen Lage 0 am Ende der Verzögerung $T_2$ zurückkommt,

— einen zweiten bistabilen Trigger (42), der durch den Formgebungskreis (32) und den Ausgang eines logischen, die Ausgänge des ersten monostabilen Triggers (36) und des ersten bistabilen Triggers (40) bekommenden UND-Gliedes (46), gesteuert wird, wobei der Verarbeitungskreis (34) zum Aussenden eines Auslösebefehls nach Aussendung von drei Impulsen durch den Formgebungskreis (32) ausgebildet ist, wobei der dritte Impuls des Formgebungskreises (32) zwangsweise während der Verzögerung $T_2$ des zweiten monostabilen Triggers (38) und nach dem Ende der Verzögerung $T_1$ des ersten monostabilen Triggers (36) eintreten muss.

2. Schutzvorrichtung nach Anspruch 1, dadurch gekennzeichnet, dass das elektronische Relais (20) weiter eine die zu überwachende Spannung U detektierende Vorrichtung (60) aufweist, ausgeführt zum Senden eines Steuersignals, wenn die Spannung zwischen zwei vorbestimmten Grenzen $U_1$ und $U_2$ liegt.

3. Schutzvorrichtung nach Anspruch 2, dadurch gekennzeichnet, dass die den Spannungswert U detektierende Vorrichtung (60) und der logische Verarbeitungskreis (34) an einem logischen, einen elektronischen Schalter (52) steuernden UND-Glied (62) verbunden sind, welcher Schalter die Speisung der Auslösespule (22) des stromaufwärts des Fehlers liegenden Unterbrechers (14) steuert.

4. Schutzvorrichtung nach Anspruch 3, dadurch gekennzeichnet, dass das elektronische Relais (20) weiter einen Stromvergleicher (64) aufweist, der einen Befehl an einen logischen UND-Kreis (62) abgibt, wenn der Strom I in den Sammelstromschienen (12) grösser ist, als eine vorbestimmte Schwelle.

5. Schutzvorrichtung nach Anspruch 3 oder 4, dadurch gekennzeichnet, dass die Spule (22) beim Auslösen durch die Fehlerspannung gespeist wird.


**Claims**

1. Protection device of an electric equipment from a power arc sticken along a bar system (12) of the equipment, said device comprising an arc detecting member capable of sending, in case of arc fault, a tripping order to a breaking device (14) located above the fault, wherein the arc detecting member is formed by an electronic relay (20) comprising:

— means of analysis of the alternating voltage U present between the conductors of the bar system (12),

— analogic means of the fault discrimination sensitive to the change of the U voltage form and generating a control signal when the high temporary derivative of the U voltage exceeds a predetermined value,

— and means to process the control signal for building up the tripping process following the appearance of an arc fault, characterized in that said analogic means of the fault discrimination comprise a filtering circuit (28) associated with a threshold gate (30), which is connected to a transformation circuit (32) cooperating with a logic processing circuit (34) playing a role in the elaboration of the tripping process by assuring the distinction between a temporary incident and a real arc fault, said processing circuit (34) comprising:

— members of time-lag constituted by a first (36) and a second (38) monostable trigger circuit, each receiving the output of the transformation circuit (32) and remaining in the logic state 1 during predetermined time-lags respectively T1 and T2, when a first pulse is generated by the transformation circuit (32), the time-lag T2 of the second monostable trigger circuit (38) being above the one T1 of the first monostable trigger circuit (36),

— a first bistable trigger circuit (40) controlled by the transformation circuit (32) and by the second monostable trigger circuit (38) so that the passage of the output of the first bistable trigger circuit (40) to the logic state 1 happens when the transformation circuit (32) emits a second pulse and so that the output of said first bistable trigger circuit (40) is automatically reset to the logic state 1 at the end of the time-lag T2,

— a second bistable trigger circuit (42) controleld by the transformation circuit (32) and by the output of a logic gate AND (46) receiving the outputs of the first monostable trigger circuit (36) and of the first bistable trigger circuit (40), the processing circuit (34) being accommodated to deliver the tripping order after the emission of three pulses by the transformation circuit (32), the third pulse of the transformation circuit (32) having obligatorily to happen during the time-lag T2 of the second monostable trigger circuit (38) and after the end of the time-lag T1 of the first monostable trigger circuit (36).

2. Protection device according to Claim 1, characterized by the fact that furthermore the relay (20) comprises a device (60) detecting the value of the voltage U, said device generating a tripping order when the voltage U is comprised between two limits U1 and U2 of predetermined values.

3. Protection device according to Claim 2, characterized by the fact that the device (60) detecting the voltage value U and the logic processing circuit (34) are connected to a logic circuit AND (62) actuating a static switch (52) controlling the excitation of a tripping coil (22) of a breaking device (14) placed above the fault.

4. Protection device according to Claim 3, characterized by the fact that in addition the electronic relay (20) comprises a current comparing element (64) generating an order to the logic circuit AND (62), when the current I flowing along the bar system (12) is above a predetermined threshold Is.

5. Protection device according to claim 3 or 4, characterized by the fact that the coil (22) is supplied by the fault voltage, when the tripping occurs.

0 094 871

Fig. 1

Fig. 2

11

Fig. 3

Fig. 5

13

Fig. 4